(19) Europäisches Patentamt
European Patent Office
Office européen des brevets

(11) Numéro de publication : **0 010 012**
**B1**

(12) **FASCICULE DE BREVET EUROPÉEN**

(45) Date de publication du fascicule du brevet : **21.10.81**

(51) Int. Cl.³ : **B 01 F 17/00**, C 07 F 9/09

(21) Numéro de dépôt : **79400605.6**

(22) Date de dépôt : **04.09.79**

(54) **Agent de nettoyage dispersant des hydrocarbures en milieu marin.**

(30) Priorité : **29.09.78 FR 7827894**

(43) Date de publication de la demande : **16.04.80 (Bulletin 80/08)**

(45) Mention de la délivrance du brevet : **21.10.81 Bulletin 81/42**

(84) Etats contractants désignés : **BE DE FR GB IT NL SE**

(56) Documents cités :
**FR - A - 2 022 508**
**GB - A - 1 081 285**
**US - A - 3 626 035**

(73) Titulaire : **P C U K PRODUITS CHIMIQUES UGINE KUHLMANN**
**Service Propriété Industrielle Tour Manhattan**
**F-92087 PARIS LA DEFENSE 2 Cédex 21 (FR)**

(72) Inventeur : **Person, Lucien**
**132, rue du Président Wilson**
**F-92300 Levallois Perret (FR)**
Inventeur : **Bouma, Yves**
**70, rue Boursault**
**F-75017 Paris (FR)**

(74) Mandataire : **Houssin, Jean et al**
**PRODUITS CHIMIQUES UGINE KUHLMANN Service Propriété Industrielle Tour Manhattan Cedex 21**
**F-92087 Paris La Defense 2 (FR)**

**EP 0 010 012 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 17, rue du Louvre, 75001 Paris, France

Agent de nettoyage dispersant des hydrocarbures en milieu marin

La présente invention concerne des agents de nettoyage dispersant les composés hydrocarbonés qui en particulier se trouvent accidentellement à une concentration élevée en milieu marin que ce soit sur les mers ou sur les sols des rivages côtiers tels que plages, rochers, équipements portuaires.

Le développement de l'utilisation des produits pétroliers a conduit à transporter des quantités de plus en plus importantes de ces produits par voies maritimes, ainsi qu'à prospecter les fonds marins. Ces opérations provoquent maintenant de plus en plus souvent des pertes qui conduisent à une pollution du milieu marin. Pour éliminer ou tout au moins réduire cette pollution par les hydrocarbures plusieurs techniques peuvent être utilisées. Il est envisageable, par exemple, de disperser les hydrocarbures qui se trouvent à la surface des eaux ou de déplacer, par une action détergente, les hydrocarbures des sols souillés avant de les disperser en milieu aqueux. Dans les deux cas, les hydrocarbures sont dispersés en milieu aqueux. Sous forme dispersée, les hydrocarbures subissent davantage les actions chimiques, photochimiques ou biologiques, naturelles ou provoquées, qui conduisent à leur dégradation. Certains agents tensio-actifs, habituellement du type anionique, connus pour leur pouvoir détergent et dispersant, ont d'ailleurs été essayés pour déplacer des surfaces souillées des hydrocarbures sous forme d'émulsion plus ou moins stable de fines particules dans l'eau. Toutefois les performances de ces produits du point de vue pouvoir nettoyant et pouvoir dispersant, intéressantes lorsqu'il s'agit de pollution en eaux douces sont très médiocres dès qu'il s'agit de pollution en milieu marin. En fait l'action des tensio-actifs est plus ou moins efficace selon la nature des eaux considérées : eaux douces ou eaux dures. Les eaux dures se différencient des eaux douces en ce qu'elles contiennent, outre des cations alcalins communs à toutes les eaux, des cations alcalino-terreux ; tel est le cas de l'eau de mer. Cette différence d'efficacité des tensio-actifs est également constatée sur les sols pollués selon qu'ils soient en contact avec une eau douce ou une eau dure. La présence de sels alcalino-terreux imprégnés dans les sols riverains ou en contact intermittent avec l'eau de mer explique le manque d'efficacité, lors de pollution par les hydrocarbures, des tensio-actifs habituellement connus pour leur pouvoir nettoyant et dispersant.

Comme on peut s'en rendre compte à partir des explications précédentes, bien qu'une multitude de tensio-actifs soit connue comme nettoyant et dispersant en milieu eau douce, pratiquement aucun n'a pu être mis en évidence pour ses propriétés nettoyantes et dispersantes des hydrocarbures en milieu marin. Cela a malheureusement pu être constaté lors des récentes pollutions marines de côtes européennes.

La présente invention concerne un agent de nettoyage, utilisé comme dispersant des composés hydrocarbonés en milieu marin, contenant un mélange de triesters phosphoriques. Ces agents de nettoyage dispersants des hydrocarbures sont caractérisés en ce qu'ils comprennent un mélange de triesters phosphoriques de deux types :

— les triesters de formule :

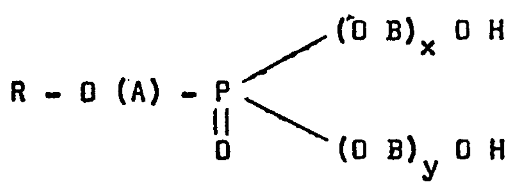

— les triesters de formule :

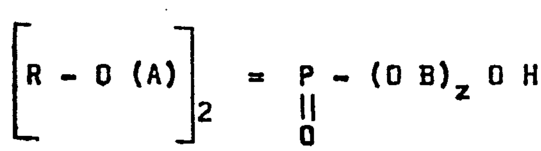

où :

R représente le reste d'un alcool ou d'un acide, linéaire ou faiblement ramifié, contenant de 6 à 20 atomes de carbone. A titre informatif, on entend par faiblement ramifié un composé dont les ramifications ne nuisent pas à la biodégradabilité du produit final.

A représente :

un mélange de groupements éthoxy et propoxy dans lequel le rapport du nombre des fonctions éthoxy aux fonctions propoxy est inférieur à 2 et dans lequel le nombre de groupements propoxy est inférieur à 10, ou de :

— 1 à 4,0 groupements éthoxy quand le nombre de carbones de R est inférieur à 12,

— 1 à 10,0 groupements éthoxy quand le nombre de carbones de R est de 12 à 15,

— 1 à 15,0 groupements éthoxy quand le nombre de carbones de R est de 16 à 20.

B représente :

un groupement $-\underset{\underset{R'}{|}}{CH}-CH_2-$

dans lequel R′ est un hydrogène ou un radical méthyl ou un radical éthyl.

x, y, z, ont une valeur de 1 à 4, $\frac{x+y+z}{3}$ étant supérieur à 1.

Le rapport pondéral de l'un à l'autre de chacun des deux types de triester dans le mélange est en général de 35 à 65 % pour 65 à 35 %.

Ce mélange de triesters phosphoriques, qui sont des monoesters et diesters alkoxylés, résulte de l'estérification par des acides polyphosphoriques, ou mieux, pour des raisons pratiques, par l'anhydride phosphorique, de produits de condensation d'oxyde d'éthylène ou d'oxyde d'éthylène et d'oxyde de propylène, sur des alcools ou des acides, suivie de la réaction d'oxyde d'éthylène ou d'oxyde de propylène ou d'oxyde de butylène sur les atomes d'hydrogène réactif des monoesters et diesters formés.

Les composés préférés de l'invention résultent de la réaction de l'oxyde d'éthylène ou de l'oxyde de propylène sur les atomes d'hydrogène réactif des mélanges équipondéraux de monoesters et de diesters d'alcools ayant de 8 à 20 atomes de carbone alkoxylés par 1 à 8 molécules d'oxyde d'éthylène.

Le procédé de fabrication des mélanges de monoesters et diesters phosphoriques est connu. La réaction de l'anhydride phosphorique sur un produit à fonction alcool, en proportions stœchiométriques, conduit à un mélange équimoléculaire de monoester et de diester dans lequel subsistent des liaisons pyrophosphoriques. Pour supprimer les esters pyrophosphoriques ou pour obtenir un mélange plus riche en monoester, on diminue la quantité de produit à fonction alcool et on ajoute de l'eau au mélange réactionnel.

En pratique, le produit de condensation d'oxyde d'alcoylène sur l'alcool ou d'acide, préalablement préparé, est introduit dans un réacteur équipé d'une agitation efficace et chauffé vers 40-50 °C. A cette température, on y ajoute progressivement en 1/2 à 1 heure, l'anhydride phosphorique nécessaire à la réaction. Après la fin de l'addition et un ajout éventuel d'eau, on porte en 1 heure le mélange à la température de 80 °C et on le maintient à cette température pendant 4 heures. On récupère ensuite le produit refroidi.

Le procédé de fabrication des produits de l'invention par réaction de l'oxyde d'éthylène ou de l'oxyde de propylène ou de l'oxyde de butylène sur les atomes d'hydrogène réactif des monoesters et diesters phosphoriques, préparés extemporanément ou non, est connu. Il est décrit, par exemple, dans le brevet des ÉTATS-UNIS D'AMÉRIQUE 2.909.559.

Ce procédé consiste à introduire progressivement l'oxyde d'alcoylène dans le mélange bien agité des monoesters et diesters phosphoriques contenu dans le réacteur. La température, qui monte progressivement par l'exothermicité de la réaction, est maintenue inférieure à 60 °C. On arrête l'addition de l'oxyde d'alcoylène quand l'exothermicité de la réaction cesse. Après l'arrêt de l'addition de l'oxyde d'alcoylène, le mélange est maintenu sous agitation pendant 1 heure environ pour terminer la réaction de l'oxyde d'alcoylène sur les hydrogènes réactifs restants. Puis l'oxyde d'alcoylène en excès est éliminé sous vide. Il reste dans le réacteur le mélange de triesters phosphoriques qui est le composé mis en œuvre selon l'invention.

L'emploi de ces agents de nettoyage est recommandé pour leur efficacité à déplacer les hydrocarbures des surfaces marines polluées, et pour leur efficacité dispersante constatée tant dans la dispersion en fines particules des hydrocarbures que dans la stabilité de la dispersion formée. En outre ces produits présentent l'avantage d'être fortement biodégradables et non toxiques, aux doses utilisées, pour le milieu marin.

Leur mise en œuvre est identique à celle des composés nettoyants et dispersants connus et utilisés en eaux douces. Ils sont très efficaces quand ils sont utilisés tels quels ou sous forme de solution ou de dispersion dans l'eau. On peut également les utiliser en solution dans un solvant. Tous les solvants conviennent pour la mise en solution des agents de nettoyage dispersants ; cependant, il est recommandé d'employer des solvants biodégradables et non toxiques. Les éthers de glycol conviennent particulièrement comme solvants, ainsi que les hydrocarbures légers non toxiques et les produits à fonction alcool. L'utilisation de ces agents de nettoyage dispersants sous forme concentrée ou diluée ainsi que les quantités à mettre en œuvre dépendent de la nature du produit pétrolier à éliminer : pétrole, goudrons, cambouis, combustibles ou autres, et de la surface salie. En général, les quantités d'agents de nettoyage dispersant à mettre en œuvre se trouvent dans un rapport en poids de 0,01 à 1 pour 1 du produit pétrolier.

Le mode d'utilisation varie également en fonction de la nature du produit pétrolier et de la surface polluée. On peut choisir la pulvérisation sur l'hydrocarbure surnageant à la surface des eaux, le lavage à la lance d'eau sous pression, ou encore l'utilisation manuelle ou avec machines de lavage quand il s'agit de nettoyage de surfaces dures.

Afin d'illustrer l'invention, une série d'agents de nettoyage, référencés de N à V, sont préparés dans

les conditions suivantes, les valeurs correspondantes à chacun d'eux se trouvant dans le tableau I.

Dans un réacteur de 500 ml équipé d'un agitateur, d'un réfrigérant et d'un tube plongeant pour l'arrivée d'azote, on introduit « a » g d'alcool possédant « b » atomes de carbone, alkoxylé par « c » molécules d'oxyde d'éthylène ou d'un mélange d'oxyde d'éthylène et d'oxyde de propylène. La température du mélange est portée à 50 °C et on ajoute progressivement en 1 heure « d » g d'anhydride phosphorique en maintenant la température entre 50 et 60 °C. Puis on ajoute « e » g d'eau avant de porter en 1 heure la température à 80 °C qui est maintenue pendant 4 heures. Après refroidissement on obtient un mélange de diester et de monoester phosphoriques. Par le tube plongeant, ou par une ampoule, on introduit progressivement en 4 heures sous agitation à une température de 55-60 °C « f » g d'un oxyde d'alcoylène « g » dans le mélange d'esters phosphoriques. Après cette introduction les esters sont maintenus 1 heure à 55 °C sous azote avant d'être soumis encore pendant 1 heure à un vide de 15 mm Hg. On récupère finalement les triesters phosphoriques utilisés selon l'invention.

TABLEAU I

| | a | b | c* | d | e | f | g* |
|---|---|---|---|---|---|---|---|
| N | 300 | C13-C15 ex-oléfines linéaires | 2 O.E. | 56,7 | 3,2 | 110 | O.E. |
| O | 300 | C13-C15 ex-oléfines linéaires | 2,8 O.E. | 51 | 2,85 | 98 | O.E. |
| P | 300 | C13-C15 ex-oléfines linéaires | 4 O.E. | 44 | 2,4 | 85 | O.E. |
| Q | 200 | C15-C17 ex-oléfines linéaires | 3 O.E. | 30 | 1,7 | 68 | O.E. |
| R | 100 | C9-C11 ex-oléfines linéaires | 3 O.E. | 19,2 | 1,05 | 51 | O.B. |
| S | 200 | C17-C19 ex-oléfines linéaires | 11 O.E. | 14,8 | 0,8 | 30 | O.E. |
| T | 200 | C13-C15 ex-oléfines linéaires | 7 O.E. | 21,7 | 1,2 | 40 | O.E. |
| U | 250 | C13-C15 ex-oléfines linéaires | 5,2 O.E.<br>8,0 O.P. | 17,0 | 0,95 | 45 | O.E. |
| V | 100 | C13-C15 ex-oléfines linéaires | 4 O.E. | 14,5 | 0,8 | 37 | O.P. |
| W | 300 | C13-C15 ex-oléfines linéaires | 2,8 O.E. | 51 | 2,85 | 110 | O.P. |

*O.E. : oxyde d'éthylène
O.P. : oxyde de propylène
O.B. : oxyde de butylène.

Le rapport pondéral de chacun des deux types de triester selon l'invention dans les produits N à V ci-dessus est de 35 à 65 % de l'un des types de triester pour 65 à 35 % de l'autre type de triester.

A partir de cette série d'agents de nettoyage ont été réalisés les essais de l'exemple suivant.

EXEMPLE.

Cet exemple permet d'apprécier l'efficacité d'une part du pouvoir nettoyant et d'autre part du pouvoir émulsifiant des produits suivants :

A) Alcool en C13-C15 à 7 molécules d'oxyde d'éthylène à 50 % dans l'eau.

B) Dodécylbenzène sulfonate de sodium à 25 % dans le méthyl glycol.

C) Lauryl sulfate de sodium à 10 % dans le méthyl glycol.

D) Phosphate d'alcool en C9-C11 à 5,0 molécules d'oxyde d'éthylène, à 25 % dans le méthyl glycol.

E) Phosphate d'alcool en C13-C15 à 7,0 molécules d'oxyde d'éthylène, à 25 % dans le méthyl glycol.

F) Phosphate d'alcool en C13-C15 à 2,0 molécules d'oxyde d'éthylène, à 25 % dans le méthyl glycol.

G) Phosphate d'alcool en C13-C15 à 2,8 molécules d'oxyde d'éthylène, à 25 % dans le méthyl glycol.

H) Phosphate d'alcool en C13-C15 à 4,0 molécules d'oxyde d'éthylène, à 25 % dans le méthyl glycol.

I) Phosphate d'alcool en C13-C15 à 11,0 molécules d'oxyde d'éthylène, alkoxylé par l'oxyde d'éthylène, à 25 % dans le méthyl glycol.

J) Phosphate d'alcool en C9-C11 à 5,0 molécules d'oxyde d'éthylène, alkoxylé par l'oxyde d'éthylène, à 25 % dans le méthyl glycol.

K) Phosphate d'alcool en C13-C15 à 50 molécules d'oxyde d'éthylène, alkoxylé par l'oxyde

d'éthylène, à 25 % dans le méthyl glycol.

L) Phosphate d'alcool en C13-C15 à 100 molécules d'oxyde d'éthylène, alkoxylé par l'oxyde d'éthylène, à 25 % dans le méthyl glycol.

M) Phosphate d'alcool en C9-C11 à 30 molécules d'oxyde d'éthylène, alkoxylé par l'oxyde d'éthylène, à 25 % dans le méthyl glycol.

N) Phosphate d'alcool en C13-C15 à 2,0 molécules d'oxyde d'éthylène, alkoxylé par l'oxyde d'éthylène, à 25 % dans le méthyl glycol.

O) Phosphate d'alcool en C13-C15 à 2,8 molécules d'oxyde d'éthylène, alkoxylé par l'oxyde d'éthylène, à 25 % dans le méthyl glycol.

P) Phosphate d'alcool en C13-C15 à 4,0 molécules d'oxyde d'éthylène, alkoxylé par l'oxyde d'éthylène, à 25 % dans le méthyl glycol.

Q) Phosphate d'alcool en C15-C17 à 3,0 molécules d'oxyde d'éthylène, alkoxylé par l'oxyde d'éthylène, à 25 % dans le méthyl glycol.

R) Phosphate d'alcool en C9-C11 à 3,0 molécules d'oxyde d'éthylène, alkoxylé par l'oxyde de butylène, à 25 % dans le méthyl glycol.

S) Phosphate d'alcool en C17-C19 à 11 molécules d'oxyde d'éthylène, alkoxylé par l'oxyde d'éthylène, à 25 % dans le méthyl glycol.

T) Phosphate d'alcool en C13-C15 à 7,0 molécules d'oxyde d'éthylène, alkoxylé par l'oxyde d'éthylène, à 25 % dans le méthyl glycol.

U) Phosphate d'alcool en C13-C15 à 5,2 molécules d'oxyde d'éthylène, et 8,0 molécules d'oxyde de propylène, alkoxylé par l'oxyde d'éthylène, à 25 % dans le méthyl glycol.

V) Phosphate d'alcool en C13-C15 à 4,0 molécules d'oxyde d'éthylène, alkoxylé par l'oxyde de propylène, à 25 % dans le méthyl glycol.

W) Phosphate d'alcool en C13-C15 à 2,8 molécules d'oxyde d'éthylène, alkoxylé par l'oxyde de propylène, à 25 % dans le méthyl glycol.

Les composés A à M, connus comme agents tensio-actifs, ne correspondent pas à l'objet de l'invention et sont donnés à titre d'exemples comparatifs.

Les composés A à C sont des tensio-actifs du type classique.

Les composés D à H sont constitués par un mélange équipondéral d'esters phosphoriques de deux types :

— les monoesters représentés par la formule :

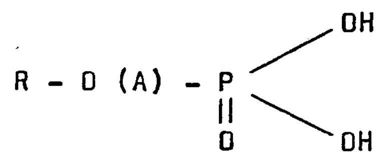

— et les diesters représentés par la formule :

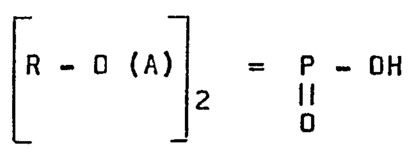

où R et A ont la même signification que dans les produits de l'invention.

Les composés I à M sont des produits du même type que ceux de l'invention, mais ils en sont exclus par le nombre d'oxyde d'alcoylène qui ne correspond pas à celui caractérisant le A de la formule revendiquée.

Les composés N à V correspondent aux produits de l'invention.

Le test d'évaluation du pouvoir nettoyant des produits dispersant les hydrocarbures, permet de définir une efficacité de nettoyage des surfaces solides salies par un produit pétrolier.

On forme deux lits de 100 ml de sable dans deux entonnoirs cylindriques à plaque frittée de grande porosité. Sur un sable imbibé d'eau douce contenant 35 g/l de NaCl et sur l'autre imbibé d'eau dure du type eau de mer, on verse 2,5 g de pétrole brut (pétrole du KOWEIT), puis 1,45 ml du produit à tester en solution dans un milieu solubilisant. Après 1 heure de contact, le sable est rincé par 2 fois 100 ml d'eau douce ou dure selon le cas. Le pétrole entraîné est extrait de la couche aqueuse par du chloroforme et dosé par photocolorimétrie. De la quantité de pétrole déplacée lors du rincage on déduit l'efficacité du dispersant en pourcentage de la masse totale du pétrole ; les résultats obtenus sont présentés dans le tableau II suivant et exprimés en pourcentage en poids de pétrole entraîné. Les dispersants sont d'autant plus efficaces que le pourcentage en poids de pétrole déplacé est important. Quand ce pourcentage est inférieur à 20 %, les dispersants sont sans intérêt.

L'eau dure du type eau de mer utilisée dans ces essais possède la composition suivante :

— NaCl 27,5 g
— $MgSO_4$, 7 $H_2O$ 7,0 g
— $MgCl_2$, 6 $H_2O$ 5,2 g
— $CaCl_2$ 1,3 g
— KCL 0,7 g
— NaH $CO_3$ 0,21 g
— Eau déminéralisée q.s.p. 1 litre.

TABLEAU II

| Référence du composé | Efficacité en eau douce salée à 35 g/l de NaCl | Efficacité en eau de mer synthétique | Efficacité en eau de mer naturelle |
|---|---|---|---|
| A | 2 % | 2 % | |
| B | 3 % | 2 % | |
| C | 2 % | 2 % | |
| D | 5 % | 3 % | |
| E | 7 % | 4 % | |
| F | 50 % | 7 % | |
| G | 41 % | 10 % | |
| H | 34 % | 2 % | |
| N | 45 % | 48 % | 42 % |
| O | 55 % | 57 % | 55 % |
| P | 40 % | 43 % | |

Le test d'évaluation du pouvoir émulsifiant du produit dispersant les hydrocarbures permet de définir le pourcentage de dispersant, par rapport au pétrole, nécessaire pour obtenir une efficacité minimale.

Dans une ampoule à décanter de 500 ml en verre, on met en contact 250 ml d'eau et 1 ml de pétrole brut étêté, qui, répandu à la surface de l'eau, est traité par une quantité connue de dispersant. On assure une agitation par rotation de l'ampoule fermée suivant un axe transversal et après arrêt, on effectue des prélèvements espacés dans le temps, pour mesurer la quantité de pétrole dispersé et apprécier la stabilité de la dispersion.

La variation de la teneur en pétrole dispersé, en fonction du temps écoulé depuis l'arrêt de l'agitation, pour un pourcentage en poids donné de dispersant par rapport au pétrole, se traduit par une courbe du type :

$$y = a\,e^{bx}$$

où :

y = pourcentage de pétrole dispersé
x = temps en minutes
a = valeur réelle du pourcentage de pétrole émulsionné au temps 0
b = constante, de valeur négative, qui traduit l'évolution de la quantité de pétrole dispersée au cours du temps.

L'efficacité du dispersant est donnée par la valeur $E = -\frac{1}{b}$.

Pour comparer les produits, on détermine le pourcentage en poids de dispersant sans solvant, par rapport au pétrole, nécessaire pour obtenir une efficacité minimale $-\frac{1}{b}$ égale à 5. Les dispersants sont d'autant plus efficaces que leur pourcentage par rapport au pétrole, pour obtenir une efficacité de 5 est plus faible. Quand ce pourcentage est supérieur à 30 %, les composés sont sans intérêt.

Les essais ont été effectués dans des eaux de différentes qualités : une eau douce salée à 35 g/l de chlorure de sodium et une eau dure du type eau de mer dont la composition a été donnée précédemment.

Les résultats obtenus sont donnés dans le tableau III.

TABLEAU III

| Référence du composé | % dispersant en eau douce salée à 35 g/l en NaCl | % dispersant en eau de mer synthétique | % dispersant en eau de mer naturelle |
|---|---|---|---|
| A | > 50 % | > 50 % | |
| B | > 50 % | > 50 % | |
| F | 1,5 % | > 50 % | |
| G | 1,6 % | > 50 % | |
| H | 1,8 % | > 50 % | |
| I | > 50 % | > 50 % | |
| J | > 50 % | > 50 % | |
| K | > 50 % | > 50 % | |
| L | > 50 % | > 50 % | |
| M | > 50 % | > 50 % | |
| N | 1,7 % | 12 % | 7,8 % |
| O | 1,5 % | 1,4 % | 3,4 % |
| P | 1,6 % | 1,8 % | |
| Q | 4,8 % | 6,2 % | |
| R | 6,8 % | 8,4 % | |
| S | 7,4 % | 9,6 % | |
| T | 2,8 % | 3,6 % | |
| U | 4,3 % | 4,5 % | |
| V | 9,7 % | 11,4 % | |
| W | 12,7 % | 13,2 % | |

Des essais complémentaires permettant l'évaluation du pouvoir émulsifiant des produits de l'invention formulés en l'absence de méthyl glycol ont été effectués.

Ils ont été réalisés en eau dure du type eau de mer synthétique dont la composition a été donnée précédemment.

| Nature du composé | % dispersant |
|---|---|
| Phosphate d'alcool en C13-C15 à 2,8 molécules d'oxyde d'éthylène alkoxylé par l'oxyde d'éthylène (composé O sans méthyl glycol) | 1,9 % |
| Phosphate d'alcool en C13-C15 à 2,8 molécules d'oxyde d'éthylène alkoxylé par l'oxyde d'éthylène (composé O sans méthyl glycol) à 10 % dans l'eau de mer synthétique | 2,0 % |
| Phosphate d'alcool en C13-C15 à 4,0 molécules d'oxyde d'éthylène alkoxylé par l'oxyde de propylène (composé V sans méthyl glycol) | 11,4 % |

Les résultats obtenus dans cet exemple montrent que les composés A à C, tensio-actifs de type classique, sont peu efficaces comme agents de nettoyage dispersant le pétrole et que les composés D à H, qui sont des phosphates d'alcools alkoxylés dont les hydrogènes acides n'ont pas été neutralisés par un oxyde d'alkylène comme dans les produits de l'invention, présentent en général une bonne efficacité en eau douce même chargée en chlorure de sodium, mais qu'ils ne conservent pas leurs propriétés nettoyantes et dispersantes lorsqu'ils sont employés en présence d'eau dure du type eau de mer. Les résultats obtenus montrent également que les composés I à M qui sont des produits du même type que ceux de l'invention, mais qui en diffèrent par le nombre d'oxyde d'alcoylène hors des caractéristiques revendiquées, ont un pouvoir émulsifiant médiocre tandis que les composés N à V qui sont les produits de l'invention présentent d'excellentes qualités nettoyantes et dispersantes quel que soit le milieu utilisé ou la formulation choisie.

**Revendications**

1. Agents de nettoyage dispersants des composés hydrocarbonés en milieu marin, caractérisés en ce qu'ils comprennent un mélange de triesters phosphoriques de deux types :

— les triesters de formule :

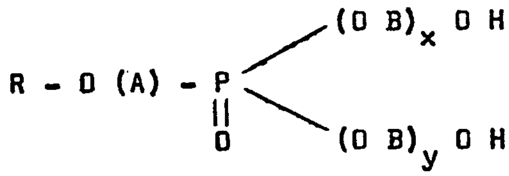

— les triesters de formule :

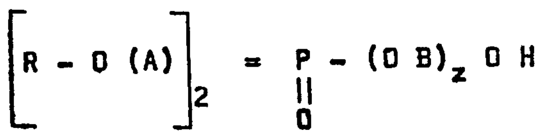

où :

R représente un reste alcoolique ou acide, linéaire ou faiblement ramifié, contenant de 6 à 20 atomes de carbone.

A représente :

— un mélange de groupements éthoxy et propoxy dans lequel le rapport du nombre des fonctions éthoxy aux fonctions propoxy est inférieur à 2 et dans lequel le nombre de groupements propoxy est inférieur à 10,

— 1 à 4 groupements éthoxy quand le nombre de carbones de R est inférieur à 12,

— 1 à 10 groupements éthoxy quand le nombre de carbones de R est de 12 à 15,

— 1 à 15 groupements éthoxy quand le nombre de carbones de R est de 16 à 20.

B représente :

— un groupement 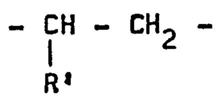

dans lequel R' est un hydrogène ou un radical méthyl ou un radical éthyl.

x, y, z, ont une valeur de 1 à 4, $\frac{x+y+z}{3}$ étant supérieur à 1.

2. Agents de nettoyage selon la revendication 1 caractérisés en ce que le rapport pondéral de l'un à l'autre de chacun des deux types de triester dans le mélange est de 35 à 65 % pour 65 à 35 %.

3. Agents de nettoyage selon l'une des revendications 1 à 2 caractérisés en ce qu'on les met en œuvre dans un rapport en poids de 0,01 à 1 pour 1 de composé hydrocarboné.

**Claims**

1. Cleaning agents for dispersing hydrocarbon compounds in a marine environment, characterised in that they comprise a mixture of two types of phosphoric acid triesters, namely :

the triesters of the formula :

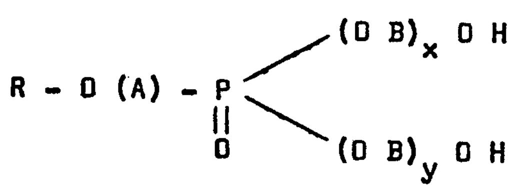

and

the triesters of the formula :

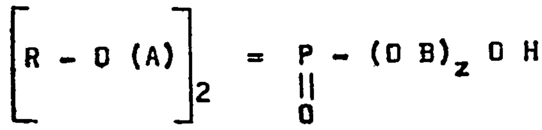

in which :

R represents a linear or slightly branched alcohol or acid radical containing from 6 to 20 carbon atoms.

A represents : a mixture of ethoxy and propoxy groups, in which the ratio of the number of ethoxy groups to propoxy groups is less than 2, and in which the number of propoxy groups is less than 10 ; 1 to 4 ethoxy groups when the number of carbons in R is less than 12 ; 1 to 10 ethoxy groups when the number of carbons in R is 12 to 15 ; or 1 to 15 ethoxy groups when the number of carbons in R is 16 to 20,

B represents : a group 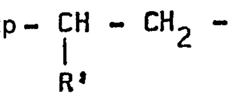

in which R′ is a hydrogen or a methyl radical or ethyl radical, and

x, y and z have a value from 1 to 4, $\frac{x+y+z}{3}$ being greater than 1.

2. Cleaning agents according to Claim 1, characterised in that the weight ratio to one another of each of the two types of triester in the mixture is 35-65 % to 65-35 %.

3. Cleaning agents according to one of Claims 1 and 2, characterised in that they are used in a weight ratio of 0.01-1 to 1 of hydrocarbon compound.

**Ansprüche**

1. Kohlenwasserstoffverbindungen in Seewassermedium dispergierende Reinigungsmittel, dadurch gekennzeichnet, daß sie eine Mischung von Phosphortriestern der beiden Typen :

— die Triester der Formel :

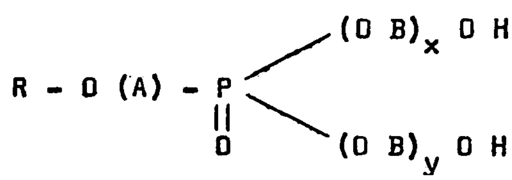

,

— die Triester der Formel :

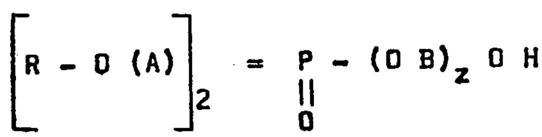

umfassen, wobei

R einen linearen oder leicht verzweigten Alkohol- oder Säurerest mit 6 bis 20 Kohlenstoffatomen darstellt.

A beschreibt :

— eine Mischung von Ethoxy- und Propoxygruppen, in der das Verhältnis der Zahl der Ethoxyfunktionen zu der der Propoxyfunktionen kleiner als 2 und in der die Zahl der Propoxygruppen kleiner als 10 ist,

— 1 bis 4 Ethoxygruppen, wenn die Zahl der Kohlenstoffe von R kleiner als 12 ist,

— 1 bis 10 Ethoxygruppen, wenn die Zahl der Kohlenstoffe von R zwischen 12 und 15 ist,

— 1 bis 15 Ethoxygruppen, wenn die Zahl der Kohlenstoffe von R zwischen 16 und 20 liegt.

B beschreibt :

— eine 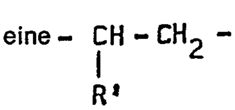 Gruppe, in der R′ Wasserstoff oder ein Methylradikal oder ein Äthylradikal ist.

x, y, z haben einen Wert von 1 bis 4, $\frac{x + y + z}{3}$ ist größer als 1.

2. Reinigungsmittel nach Anspruch 1, dadurch gekennzeichnet, daß das Gewichtsverhältnis des einen zum anderen von jedem der beiden Triestertypen in der Mischung zwischen 35 bis 65 % zu 65 bis 35 % beträgt.

3. Reinigungsmittel nach einem der Ansprüche 1 oder 2, dadurch gekennzeichnet, daß man sie im Gewichtsverhältnis von 0,01 bis 1 für einen Gewichtsteil der Kohlenwasserstoffverbindung einsetzt.